# EUROPEAN PATENT SPECIFICATION

(11) **EP 2 626 281 B1**
(45) Date of publication and mention of the grant of the patent: **08.06.2016**
(21) Application number: 12154679.0
(22) Date of filing: 09.02.2012
(51) Int. Cl.: B62D 35/00

(54) **An air guiding device and a method of reducing the air resistance of a ground vehicle**
Luftführungsvorrichtung und Verfahren zur Verringerung des Luftwiderstands eines Landfahrzeugs
Dispositif de guidage d'air et procédé de réduction de la résistance à l'air d'un véhicule terrestre

(43) Date of publication of application: 14.08.2013
(73) Proprietor: Scania CV AB (publ), 151 87 Södertälje (SE)
(72) Inventor: Hammar, Johan, 583 36 Linköping (SE); Emborg, Urban, 590 72 Ljungsbro (SE); Kristiansson, Gustav, 590 77 Vreta Kloster (SE)
(74) Representative: Berglund, Stefan

(56) References cited:
- GB-A- 2 435 246

## Description

### THE FIELD OF THE INVENTION

The present invention refers to an air guiding device for automotive ground vehicles, especially traction vehicles having a load carried by the traction vehicle or by a trailer, passenger cars with a caravan and other automotive vehicles having a following or towed vehicle body, the height and/or width of which may vary.

More precisely, the present invention refers to an air guiding device according to the preamble of claim 1. Such an air guiding device is disclosed in GB-2435246. The present invention also refers to a method of reducing the air resistance of a ground vehicle.

### THE BACKGROUND OF THE INVENTION AND PRIOR ART

GB-2465393 discloses a commercial vehicle having an air guiding device comprising several air guides. A plurality of pressure sensors are provided on the air guides. The pressure sensors sense the pressure on the air guides during the travel of the vehicle. The sensed pressures form outlet signals transmitted to a control unit, which is configured to control the position of each air guide so as to alter the aerodynamic profile of the vehicle in response to the outputs of the pressure sensors and a speed signal. Data relating to the geometry of the vehicle are passed to the control unit.

WO 2011/075009 discloses an arrangement for optimising the position of an air deflector in an automatic manner. The air deflector may be mounted on the roof of a traction vehicle. The arrangement comprises a control system sensing the speed of the vehicle. The arrangement is configured to enable optimisation of the air deflector when the control system controls the speed of the vehicle. The air deflector is controlled in response to a signal from the control system sensing a parameter regarding how the vehicle is driven, e.g. fuel consumption, speed, numbers per revolution of the engine, throttling, or torque. Furthermore, there may be a unit sensing surrounding factors such as air resistance, road conditions.

A vehicle travelling through air will force aside the air. If the vehicle comprises two vehicle bodies, where the second vehicle body may frequently have a higher height and/or a greater width than the first vehicle body, the air flowing against the vehicle will first meet a vertical, or sloping, front surface of the first vehicle body, and then a part of a vertical or sloping front surface of the second vehicle body extending upwardly and/or laterally beyond the first vehicle body. Both these front surfaces create an air resistance that in many cases is significant.

For trucks and similar vehicles it is therefore known to provide an air guide or air deflector on the roof of the cabin of the traction vehicle, or with the wording above on the roof of the first vehicle body. It is also known to provide air guides or air deflectors on the lateral sides of the first vehicle body. The air guide has the purpose of redirecting the air so as to provide a smooth transition of the air between the first vehicle body and the second vehicle body. The air guide will in such a manner protect the air from being subjected to the stagnation of the air that would otherwise occur at the front surface of the second vehicle body, i.e. the part of the front surface extending upwardly, and/or laterally, beyond the first vehicle body. Such an air guide is disclosed in the two documents mentioned above, GB-2 465 393 and WO 2011/075009.

The air guide is frequently adjustable in order to adapt the air guide to various heights of the second vehicle body. The adjustment may take place by providing a drive motor, such as an electric motor, for operating a transmission, such as a linkage coupled to the air guide, or by manual adjustment by hand.

Since the correct adjustment of the air guide is not a primary interest of the driver, but rather has an economic significance for the haulage contractor, the driver is less inclined to climbing the roof for adjusting the air guide, e.g. for each new trailer to be connected to the traction vehicle. This problem has been observed by haulage contractors and truck manufacturers. The above mentioned documents both describe techniques for automatically adjust the air guide.

The known technique disclosed in the above mentioned documents has the disadvantage that a plurality of sensors are needed. The solution of GB-2 465 393 requires a plurality of pressure sensors located at various positions on the air guide, and input of different parameters regarding the vehicle. In WO 2011/075009 various sensors and equipment for establishing different parameters of the vehicle, such as speed, fuel consumption, number of revolutions of the engine, etc are to be provided.

### SUMMARY OF THE INVENTION

The object of the present invention is to remedy the problems discussed above, and to provide an air guiding device of the initially defined kind, which has a simple construction and may be provided on any automotive ground vehicle in an easy manner. Furthermore, it is aimed at an air guiding device providing a reliable adjustment of the air guide to a proper or optimum position.

This object is achieved by the air guiding device initially defined, which is characterized by the features of the characterizing portion of claim 1.

As mentioned above an air guide on a truck will during travel be subjected to air loads from the air flowing towards the truck. The inventor of the present invention has realized that if it is desirable to change the position of the air guide during travel, the power needed for performing such a change, or movement of the air guide, will depend on the value of the air load absorbed by the air guide in the actual position. A surface orthogonal to the flowing air will be subjected to a much larger force than if the same surface has an angle of inclination of for instance 30° to the flowing air. The air load on the air guide will also depend on the position of the air guide in relation to the second vehicle body. If the air guide is properly positioned in relation to the second vehicle body, the air load will be relatively low.

During travel, the air flowing over the air guide will create a reduction of the air pressure above the air guide, and thus a lifting force acting on the air guide. The air guide will form a cavity between the air guide and the first vehicle body, for instance the roof of the first vehicle body. Optionally, the air guide may have downwardly directed side portions further enclosing the cavity.

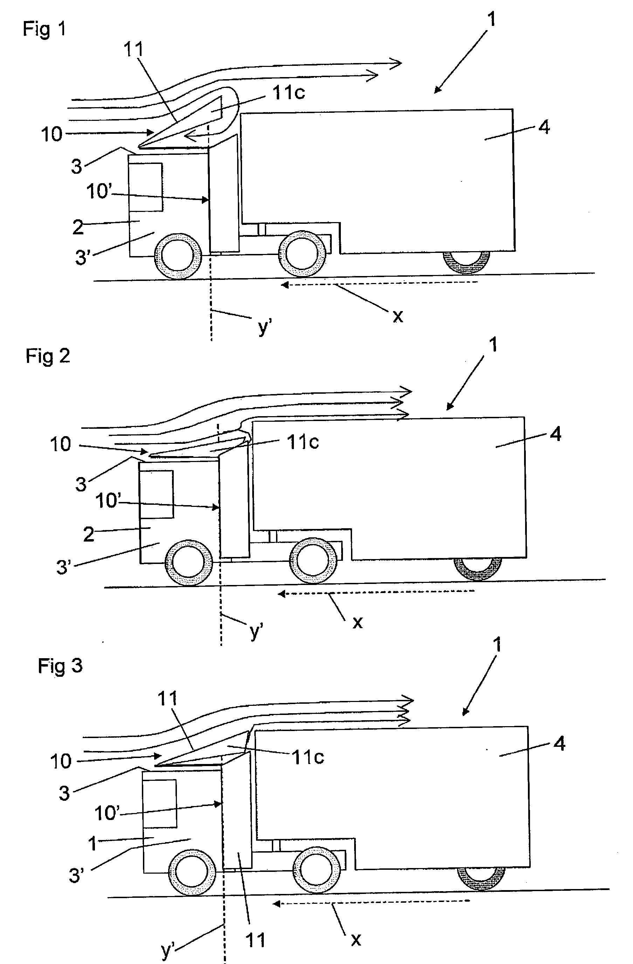

In a first case, when the rearward end of the air guide is positioned significantly above the height of the second vehicle body, the air flowing off the rearward end of the air guide may create a separate flow in an opposite direction in the cavity, and may thus increase the pressure in the cavity. This pressure increase may together with the lifting force mentioned above create a significant load on the air guide, see Fig 1.

In a second case, when the rear end of the air guide have a position lower than the height of the forward end of the second vehicle body, this part of the second vehicle body will produce a stagnation of a part of the flow. The stagnation of the flow may force an increased air quantity into the cavity, see Fig 2. A part of the stagnant flow may turn downwards and forwards over, for instance, the roof of the first vehicle body into the cavity, and thus create an increased pressure in the cavity. Also this pressure increase may as in the first case together with above mentioned lifting force create a significant load in the air guide.

In a third case, when the rear end of the air guide is positioned at the same, or approximately the same, level as the height of the second vehicle body, the air may flow smoothly over the air guide and further above the roof of the second vehicle body. The air flowing over the gap between the rearward end of the air guide and the forward edge of the second vehicle body may create a sucking force on the air in the cavity, and thus a decreased air pressure in the cavity. This decreased pressure will balance the above mentioned lifting force, which means that the total load acting on the air guide is lower in the third case than in the first and second cases.

This means that the power for holding the air guide at the angle of inclination in the third case is lower than in the first and second cases. Correspondingly, the power for moving the air guide will decrease when the air guide passes the angle of inclination of the third case, and rise when the air guide is moved towards the angle of inclination of the first or second cases. It should be noted, however, that transient phenomena may occur when the air guide passes from the position shown in the first case to the position shown in the second case or from the position shown in the second case to the position shown in the first case. These transient phenomena will not prevent a lower total force on the air guide in the position of the third case, at least not in steady state when the air guide is still-standing in the position of the third case.

Consequently, the air guide may be adjusted to a proper position during travel of the ground vehicle by taking into account the sensed parameter, or the value of the sensed parameter in accordance with the present invention. The parameter may comprise or consist of the power supplied to the drive member or the force exerted on the support structure supporting or holding the air guide. Furthermore, no manipulation is required by the driver or any other person. Merely initiation of the adjustment is needed. Of course, such initiation of the adjustment may be automatic, for instance a certain time interval after the travel did begin or when the vehicle have reached a certain speed.

The adjustment may be made independent of the vehicle in the sense that no further parameters of the vehicle are needed, such as fuel consumption, torque, air resistance of the vehicle etc. The air guiding device is thus a separate unit that may be mounted to any automotive ground vehicle at any moment. The adjustment may be initiated and made at any occasion, for instance after exchange of the second vehicle body. However, a speed signal may be used for initiating the adjustment in an automatic manner when the vehicle has reached a suitable speed, such as 50 km/h.

According to the invention, the control unit is configured control the drive member to move the air guide, in response to the signal, to a desired angle of inclination at which the sensed parameter has a minimum value. By sensing the parameter, for instance the power supplied to the drive member for moving the air guide, it is thus possible to find a position of the air guide when the power supplied is at a minimum. In this position, the air loads or total force acting on the air guide will also be at a minimum, i.e. when the air guide is in an optimum position with respect to the height and/or the width of the second vehicle body.

According to a further embodiment of the invention, the sensor is configured to generate continuously the signal corresponding to the momentarily value of the sensed parameter, wherein the control unit is configured to receive continuously the signal during a determined time period, to establish the derivative, i.e. an increase or a decrease, of the sensed parameter through incremental movements of the air guide, and to move the air guide in a direction reducing the sensed parameter. The time period may be any selected suitable time period during travel, for instance a number of minutes to perform the adjustment whereafter the air guide may be locked at the angle of inclination at which the power supplied to the drive member, or the force exerted to the air guide, is at a minimum, or during the whole travel in order to ensure that the air guide always is positioned at an optimum angle.

According to a further embodiment of the invention, the control unit is configured to control the drive member to move the air guide during a movement from a first angle of inclination to a second angle of inclination, the sensor sensing the parameter continuously during the movement, to establish the minimum value of the sensed parameter during said movement, and then to move the air guide back from the second angle of inclination until the minimum value has been reached.

The first angle of inclination may be when the air guide is at or in the proximity of a lowermost or innermost position, or an uppermost or outermost position, and correspondingly, the second angle of inclination may be when the air guide is at or in the proximity of the uppermost or outermost position, or the lowermost or innermost position.

According to a further embodiment of the invention, the air guiding device comprises a locking member which is configured to lock the air guide upon a command signal from the control unit. It is thus possible to lock the air guide at any angle of inclination. Advantageously, the control unit may be configured to provide the command signal to the locking member when no further reducing of power is possible, or when the minimum value has been reached.

According to a further embodiment of the invention, the air guide is rotatable around a transversal axis extending transversally to the longitudinal direction, wherein the drive member is configured to move the air guide by rotating the air guide around the transversal axis in order to provide said adjustment. It is to be noted that the angle of inclination as an alternative may be adjusted by means of any other movement or displacement of the air guide than a rotation around one axis.

According to a further embodiment of the invention, the parameter comprises the power supplied to the drive member. The drive member may then comprise an electrical motor comprising a winding, wherein the sensor is configured to sense said parameter by sensing the electric current through the winding of the electrical motor. A drive member comprising or consisting of an electrical motor is advantageous, since the electrical motor may easily be connected to the electrical network of the vehicle. In addition, the current supplied to the motor may be easily sensed.

According to a further embodiment of the invention, the sensor is configured to sense said parameter by sensing the force exerted on the support structure. Such a sensor may be provided on the support structure, and may comprise a torque transmitter, a strain gauge, etc.

According to a further embodiment of the invention, the air guide device comprises a filter configured to filter the signal from the sensor before the signal is received by the control unit.

According to a further embodiment of the invention, the air guide is configured to be mounted on the roof of the first vehicle body to slope forwardly and downwardly to form said angle of inclination. With such an air guide, the air resistance due to varying heights of the second vehicle body may easily be minimized.

According to a further embodiment of the invention, the air guide is configured to be mounted on a lateral side of the first vehicle body to slope forwardly and inwardly to form said angle of inclination. With such an air guide, or such air guides, the air resistance due to varying widths of the second vehicle body may easily be minimized.

The object is also achieved by means of the method defined in claim 14. Further advantageous method steps are defined in the dependent claims 15 to 17.

### BRIEF DESCRIPTION OF THE DRAWINGS

The present invention will now be explained more closely by means of a description of various embodiments and with reference to the drawings attached hereto.
- Fig 1: shows schematically a side view of an automotive ground vehicle having an air guiding device 10 at a first angle of inclination.
- Fig 2: shows schematically a side view of the automotive ground vehicle of Fig 1 with the air guiding device 10 at a second angle of inclination.
- Fig 3: shows schematically a side view of the automotive ground vehicle of Fig 1 with the air guiding device 10 at a third angle of inclination.
- Fig 4: shows more closely a schematic sectional view of the air guide device 10 at the first angle of inclination.
- Fig 5: shows more closely a schematic sectional view of the air guide device 10 at the second angle of inclination.
- Fig 6: shows schematically a circuit including a drive member and a control unit of the air guiding device.
- Fig 7: shows schematically a view from above of the automotive ground vehicle in Fig 1.
- Fig 8: shows schematically a circuit according to an alternative embodiment including a drive member and a control unit of the air guiding device.

### DETAILED DESCRIPTION OF VARIOUS EMBODIMENTS OF THE INVENTION

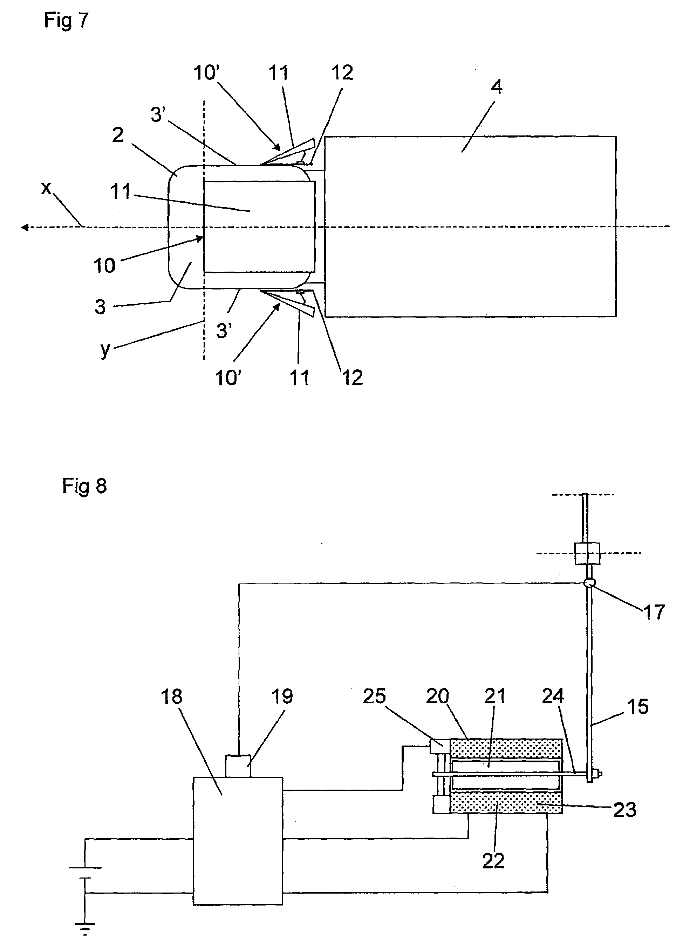

Figs 1 to 3 disclose a ground vehicle 1 defining a longitudinal axis x. The longitudinal axis x is parallel with the normal forward travel direction of the ground vehicle 1. The ground vehicle 1 comprises a first vehicle body 2 having a roof 3 and two sides 3', and a second vehicle body 4. As may be seen in Fig 7, the two sides 3' are opposite to each other. The second vehicle body 4 is arranged behind the roof 3 of the first vehicle body 2 and extends upwardly beyond the first vehicle body 2, i.e. above the roof 3 of the first vehicle body 2, and also laterally beyond the first vehicle body 2. In the embodiments disclosed, the first vehicle body 2 is a traction vehicle and the second vehicle body 4 is a trailer. The height and/or the width of such trailers may vary.

However, the traction vehicle may also carry a load on the traction vehicle itself, wherein the load forms the second vehicle body 4. Such load may have varying heights and varying widths. Furthermore, it should be mentioned that the first vehicle body 2 may be a passenger car, and the second vehicle body 4 a trailer in the form of a caravan.

In any case, the second vehicle body 4 is exchangeable, wherein the different second vehicle bodies 4 may have varying heights and varying widths.

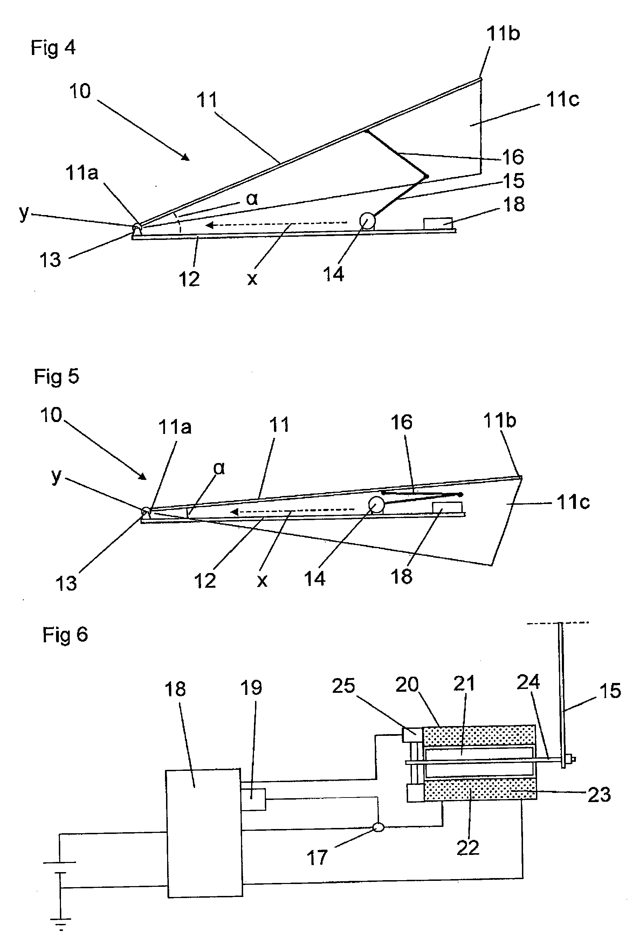

The ground vehicle 1 shown in Figs 1 - 3 cooperates with or comprises three air guiding devices 10, 10'. One of the air guiding devices 10 is mounted on the roof of the first vehicle body 2. the other two air guiding devices 10' are mounted on a respective side 3' of the first vehicle body 2. The air guiding device 10 is disclosed more closely in Figs 4 and 5 and is thus generally provided on the roof 3 of the first vehicle body 2.

The air guiding device 10 on the roof 3 will now be further explained. It comprises an air guide 11 having a forward end 11 a and a rearward end 11 b with respect to the forward travel direction. The air guide 11 thus slopes forwardly and downwardly from the rearward end 11 b towards, or to, the forward end 11 a to form an angle α of inclination to the longitudinal direction x. The air guide 11 forms a cavity behind the air guide 11, i.e. between the air guide 11 and the roof 3, and between the air guide 11 and the respective side 3', respectively.

Optionally, but not necessarily, the air guide 11 may have side portions 11 c that are bent downwards as illustrated in the figures.

The air guide 11 has in the embodiments disclosed a plane or substantially plane guide plate. It is to be noted, however, that the guide plate of the air guide 11 may have a curved shape seen transversely, in the side view of Figs 4 and 5. Such a curved shape may be convex or concave. It is also possible to let the guide plate of the air guide 11 be curved seen from above and/or seen in a front view. Such a curvature may be convex or concave. Thus, the air guide 11 may be curved in all directions.

In the embodiments disclosed, the air guide 11 is mounted to a frame 12. The frame 12 may be of any suitable kind and comprise an number of rods or a plate. The air guide is movable with respect to the frame 12 to change or adjust the angle α of inclination, and thus with respect to the longitudinal direction x and the first vehicle body 2. The air guide 11 is in the embodiments disclosed connected to the frame 12 by means of a rotary joint 13 permitting the air guide 11 to rotate around a transversal axis y being transversal, or perpendicular, to the longitudinal direction x, see also Fig 7. It should also be noted that it may be dispensed with the frame 12, and that the air guide 12 may be mounted directly on the first vehicle body 2, in this case directly on the roof 3.

The air guiding device 10 also comprises a drive member 14, which is coupled to the air guide 11 and arranged to move the air guide 11 to change the angle α of inclination, in the embodiments disclosed, to rotate the air guide 11 around the transversal axis y to provide said adjustment. The drive member 14 is coupled to the air guide 11 via a support structure, which in the embodiments disclosed comprises a linkage having a first link 15 connected to the drive member 14 and a second link 16 connected to the air guide 11. The first and second links 15, 16 are rotary connected to each other. It should be noted that the support structure 15, 16 may be designed in various ways. For instance, the support structure may as an alternative to the linkage comprise or consist of a any suitable transmission, such as a gear transmission, a gear rack, etc.

Moreover, the air guiding device 10 comprises a sensor 17 configured to generate a signal, see Fig 6, and a control unit 18 communicating with the sensor 17 to receive the signal. The control unit 18 is configured to control the drive member 14 to move the air guide 11 in response to the signal received from the sensor 17.

Furthermore, in the embodiments disclosed the air guiding device 10 comprises a filter 19, which may be included in the control unit 18 and which is configured to filter the signal from the sensor 17 before the signal is received by the control unit 18.

In the first embodiment, the drive member 14 is constituted by or comprises an electrical motor 20 comprising a rotor 21 and a stator 22, see Fig 6. The electrical motor 20 has a winding 23, preferably as a part of the stator 22. A motor shaft 24 of the rotor 21 may be attached to the linkage and the first link 15, directly or via any suitable gear mechanism.

The air guiding device 10 also comprises a locking member 25 which is configured to lock the air guide 11 at a certain angle α of inclination upon a command signal from the control unit 18. The locking member 25 may be a part of the drive member 14, or the electrical motor 20. However, the locking member may also be separate from the drive member 14.

The sensor 17 is configured to sense a parameter, or the value or level of a parameter, corresponding to the force applied to the support structure. In the first embodiment, the parameter comprises or consists of the power supplied to the drive member 14 and the sensor 17 is configured to sense the power by sensing the electric current through the winding 23 of the electrical motor 20 as a parameter of the power supplied to the electrical motor 20. The control unit 18 may also be configured to collect and take into account further parameters than the current through the winding, for instance the voltage over the winding 23, the number of revolutions of the rotor 21, the position of the rotor 21 in relation to the stator 22 etc. All or some of the various parameters may be sensed by the sensor 17, or specific sensor elements of the sensor 17, and may be filtered with the aid of the filter 19.

The sensor 17 will transmit the signal corresponding to the sensed current to the control unit 18, i.e. the momentary current through the winding 23. The control unit 18 is configured to control the electrical motor 20 to move the air guide 11 in response to the signal, i.e. in response to the sensed current through the winding 23, in order to adjust the angle α of inclination.

For instance, the control unit 18 may be configured to control the electrical motor 20 to move the air guide 11 during a movement from a first angle α of inclination, see Fig 1, to a second angle α of inclination, see Fig 2. The sensor 17 senses the current through the winding 23 continuously during this movement from the first to the second angle α of inclination. The control unit 18 then establishes the minimum value of the sensed current during said movement. Thereafter the control unit 18 activates the electric motor 20 to move the air guide 11 back from the second angle α of inclination until the minimum value of the sensed current has been reached, see Fig 3. In this position, the load on the air guide 11 is as lowest, which means that the air guide 11 is in a appropriate or optimum position with respect to the air resistance caused by the second vehicle body 4. When the air guide 11 has reached and is in this appropriate or optimum position, the control unit 18 may be configured to provide the command signal to the locking member 25, so that the air guide will remain in this position without any further power supply to the electrical motor.

As an alternative way of operating the air guiding device, the sensor 17 may be configured to generate continuously the signal corresponding to the momentarily value of the current supplied to the electrical motor 20. The control unit 18 may then be configured to receive continuously the signal during a determined time period, in order to establish the derivative, or an increase or decrease, of the sensed current through incremental movements of the air guide 11. The air guide 11 may then be moved in a direction reducing the sensed current.

According to a second embodiment, the drive member 14 is constituted by or comprises a pneumatic or hydraulic motor. In the second embodiment, the power supplied to the drive member 14 may be sensed by sensing the flow, the pressure etc. of the pneumatic or hydraulic medium of the drive member. Otherwise the second embodiment will function as the first embodiment.

It is to be noted, that in case the ground vehicle 1 would have no second vehicle body 4 or a second vehicle body 4 with a height lower than the height of the roof 3 of the first vehicle body 2, the air guiding device 10 will sense the lowest power supplied to the drive member 14 when the air guide 11 is in the lowest position, i.e. when the angle α of inclination has its lowest value.

The air guiding device 10' is shown in Fig 7. Here two air guiding devices 10' are mounted on a respective side 3' of the first vehicle body 2: It is to be noted that the air guiding device 10' have the same structure and operates in the same manner as the air guiding device 10. The only difference is the position in relation to the vehicle and the dimensions of the components of air guiding device 10', for instance of the air guide 11 and the frame 12. The air guide 11 of the air guiding devices 10' is in the embodiments disclosed rotatable with respect to the transversal axis y' being perpendicular to the longitudinal direction x and to the transversal axis y. The air guide 11 slopes forwardly and inwardly from the rearward end 11 b towards, or to, the forward end 11 a.

Fig 8 illustrates an alternative embodiment, in which the sensor 17 is configured to sense the force exerted on the support structure 15, 16. In this embodiment, the sensor 17 senses the force acting on the air guide 11 and received by or transferred to the support structure 15, 16. The force may include the lifting force mentioned above and the force created by an decreased or increased air pressure in the cavity behind the air guide 11. This alternative embodiment is applicable to the air guiding device 10 and the air guiding devices 10'. In this alternative embodiment, the sensor 17 may be provided anywhere on the support structure 15, 16. The sensor 17 may comprise a torque transmitter, a strain gauge or any similar sensor 17 configured to sense a force or a torque. In the embodiments disclosed, it may also as an alternative be possible to provide the sensor 17 at the forward end, at or on the rotary joint.

The present invention is not limited to the embodiments disclosed but may be varied and modified within the scope of the following claims.

## Claims

1. An air guiding device (10; 10') for a ground vehicle (1) defining a longitudinal axis (x) being parallel with the normal forward travel direction of the ground vehicle (1), wherein the ground vehicle (1) comprises a first vehicle body (2) having a roof (3), and a second vehicle body (4) arranged behind the first vehicle body (2) and extending upwardly and/or laterally beyond the first vehicle body (2),
the air guiding device (10; 10') comprising
an air guide (11) configured to be provided on the first vehicle body (2), the air guide (11) having a forward end (11 a) and a rearward end (11 b) and sloping from the rearward end (11 b) towards the forward end (11 a) to form an angle (α) of inclination to the longitudinal direction (x),
a support structure (15, 16) supporting the air guide (11),
a drive member (14) coupled to the air guide (11) and arranged to move the air guide (11) to change the angle (α) of inclination,
a sensor (17) configured to generate a signal, and
a control unit (18) configured to control the drive member (14) to move the air guide (11) in response to the signal,
wherein the sensor (17) is configured to sense a parameter corresponding to the force applied to the support structure (15, 16) for supporting the air guide and to transmit the signal corresponding to the sensed parameter to the control unit (18), and
wherein the control unit (18) is configured to control the drive member (14) to move the air guide (11) in response to the signal, and thus to the sensed parameter, to adjust the angle (α) of inclination,
**characterised in**
**that** the control unit (18) is configured control the drive member (14) to move the air guide (11), in response to the signal, to a desired angle (α) of inclination at which the sensed parameter has a minimum value.

2. An air guiding device (10; 10') according to claim 1, wherein the sensor (17) is configured to generate continuously the signal corresponding to the momentarily value of the sensed parameter, and wherein the control unit (18) is configured to receive continuously the signal during a determined time period, to establish the derivative of the sensed parameter through incremental movements of the air guide (11), and to move the air guide (11) in a direction reducing the sensed parameter.

3. An air guiding device (10; 10') according to claim 1, wherein the control unit (18) is configured
to control the drive member (14) to move the air guide (11) during a movement from a first angle (α) of inclination to a second angle (α) of inclination, the sensor (17) sensing the parameter continuously during the movement,
to establish the minimum value of the sensed parameter during said movement, and then
to move the air guide back (11) from the second angle (α) of inclination until the minimum value has been reached.

4. An air guiding device (10; 10') according to any one of the preceding claims, wherein the air guiding device (10; 10') comprises a locking member (25) which is configured to lock the air guide (11) upon a command signal from the control unit (18).

5. An air guide according (10; 10') to claim 4, wherein the control unit (18) is configured to provide the command signal to the locking member (25) when the minimum value has been reached.

6. An air guiding device (10; 10') according to any one of the preceding claims, wherein the air guide (11) is rotatable around a transversal axis (y; y') extending transversally to the longitudinal direction (x), and wherein the drive member (14) is configured to move the air guide (11) by rotating the air guide (11) around the transversal axis (y; y') in order to provide said adjustment.

7. An air guiding device (10; 10') according to any one of the preceding claims, wherein the parameter comprises the power supplied to the drive member (14).

8. An air guiding device (10; 10') according to claim 7, wherein the drive member (14) comprises an electrical motor (20) comprising a winding (23) and wherein the sensor (17) is configured to sense said parameter by sensing the electric current through the winding (23) of the electrical motor (20).

9. An air guiding device (10; 10') according to any one of claims 1 to 6, wherein the sensor (17) is configured to sense said parameter by sensing the force exerted on the support structure (15, 16).

10. An air guiding device according to claim 9, wherein the sensor (17) is provided on the support structure (15, 16).

11. An air guiding device (10; 10') according to any one of the preceding claims, wherein the air guiding device (10) comprises a filter (19) configured to filter the signal from the sensor (17) before the signal is received by the control unit (18).

12. An air guiding device (10) according to any one of the preceding claims, wherein the air guide (11) is configured to be mounted on the roof (3) of the first vehicle body (2) to slope forwardly and downwardly to form said angle (α) of inclination.

13. An air guiding device (10') according to any one of the preceding claims, wherein the air guide (11) is configured to be mounted on a lateral side of the first vehicle body (2) to slope forwardly and inwardly to form said angle (α) of inclination.

14. A method of reducing the air resistance of a ground vehicle (1) defining a longitudinal axis (x) being parallel with the forward normal travel direction of the ground vehicle (1), wherein the ground vehicle (1) comprises a first vehicle body (2) having a roof (3), and a second vehicle body (4) arranged behind the first vehicle body (2) and extending upwardly and/or laterally beyond the first vehicle body (2), the method comprising the steps of:
- providing an air guide (11) on the first vehicle body (2), the air guide (11) having a forward end (11 a) and a rearward end (11 b), to slope from the rearward end (11b) towards the forward end (11a) to form an angle (α) of inclination to the longitudinal direction (x),
- supporting the air guide (11) by means of a support structure (15, 16),
- moving the air guide (11) by means of a drive member (14),
- sensing a parameter corresponding to the force applied to the support structure (15, 16) for supporting the air guide (11),
- generating a signal corresponding to the sensed parameter, and
- controlling the drive member (14) to move the air guide (11) in response to the signal and the sensed parameter to adjust the angle (α) of inclination and to a desired angle (α) of inclination at which the sensed parameter has a minimum value.

15. A method according to claim 14,
wherein the sensing step comprises
generating continuously the signal corresponding to the momentarily value of the sensed parameter, and
wherein the control step comprises
receiving continuously the signal during a determined time period, establishing the derivative of the sensed parameter through incremental movements of the air guide (11), and
moving the air guide (11) in a direction reducing the sensed parameter.

16. A method according to claim 15, wherein the control step comprises
controlling the drive member (14) to move the air guide (11) during a movement from a first angle (α) of inclination to a second angle (α) of inclination,
sensing the parameter continuously during the movement,
establishing the minimum value of the sensed power during said movement, and then
moving the air guide (11) back from the second angle (α) of inclination until the minimum value has been reached.

17. A method to any one of claims 14 to 16, comprising the further step of:
locking the air guide (11) at the desired angle (α) of inclination when the minimum value has been reached.

## Patentansprüche

1. Luftführungsvorrichtung (10; 10') für ein Landfahrzeug (1), bei dem eine Längsachse (x) parallel zur normalen Vorwärtsfahrtrichtung des Landfahrzeugs (1) definiert wird, wobei das Landfahrzeug (1) einen ersten Fahrzeugkörper (2) mit einem Dach (3) und einen zweiten Fahrzeugkörper (4) umfasst, welcher hinter dem ersten Fahrzeugkörper (2) angeordnet ist und nach oben und/oder seitlich über den ersten Fahrzeugkörper (2) hinaus verläuft,
wobei die Luftführungsvorrichtung (10; 10') folgendes umfasst:
eine Luftführung (11), die zur Anbringung am ersten Fahrzeugkörper (2) konfiguriert ist, wobei die Luftführung (11) ein vorderes Ende (11 a) und ein hinteres Ende (11 b) hat und dabei von ihrem hinteren Ende (11 b) zu ihrem vorderen Ende (11a) geneigt verläuft, so dass sich ein Neigungswinkel (α) zur Längsrichtung (x) ergibt,
eine Stützstruktur (15, 16), die die Luftführung (11) stützt,
ein Antriebselement (14), das mit der Luftführung (11) gekoppelt ist und so angeordnet ist,
dass es die Luftführung (11) derart bewegt, dass sich der Neigungswinkel (α) verändert,
einen Sensor (17), der zur Erzeugung eines Signals konfiguriert ist, und
eine Steuereinheit (18), die zur Steuerung des Antriebselements (14) zur Bewegung der Luftführung (11) als Reaktion auf ein Signal konfiguriert ist,
wobei der Sensor (17) derart konfiguriert ist, dass er einen Parameter erfasst, der der an die Stützstruktur (15, 16) angelegten Kraft zum Stützen der Luftführung entspricht, und das dem erfassten Parameter entsprechende Signal an die Steuereinheit (18) überträgt, und
wobei die Steuereinheit (18) derart konfiguriert ist, dass sie das Antriebselement (14) so steuert, dass es die Luftführung (11) als Reaktion auf das Signal, und somit auf den erfassten Parameter, bewegt, um den Neigungswinkel (α) einzustellen,
**dadurch gekennzeichnet,**
**dass** die Steuereinheit (18) derart konfiguriert ist, dass sie das Antriebselement (14) so steuert, dass es als Reaktion auf das Signal die Luftführung (11) in einen gewünschten Neigungswinkel (α) bewegt, bei dem der erfasste Parameter einen minimalen Wert hat.

2. Luftführungsvorrichtung (10; 10') nach Anspruch 1, bei der der Sensor (17) derart konfiguriert ist, dass er kontinuierlich das Signal entsprechend dem Momentanwert des erfassten Parameters erzeugt, und bei der die Steuereinheit (18) derart konfiguriert ist, dass sie während einer bestimmten Zeitperiode kontinuierlich das Signal empfängt, um dadurch die Ableitung des erfassten Parameters durch schrittweise Bewegung der Luftführung (11) zu ermitteln und die Luftführung (11) in eine Richtung zu bewegen, in der sich der erfasste Parameter verringert.

3. Luftführungsvorrichtung (10; 10') nach Anspruch 1, bei der die Steuereinheit (18) derart konfiguriert ist,
dass sie das Antriebselement (14) so steuert, dass die Luftführung (11) während ihrer Bewegung von einem ersten Neigungswinkel (α) in einen zweiten Neigungswinkel (α) bewegt wird, wobei der Sensor (17) während dieser Bewegung den Parameter kontinuierlich erfasst, dass sie den Minimalwert des erfassten Parameters während dieser Bewegung ermittelt, und anschließend
die Luftführung (11) aus dem zweiten Neigungswinkel (α) zurück bewegt, bis der Minimalwert erreicht ist.

4. Luftführungsvorrichtung (10; 10') nach einem der voranstehenden Ansprüche, bei der die Luftführungsvorrichtung (10; 10') ein Arretierungselement (25) umfasst, das derart konfiguriert ist, dass es die Luftführung (11) auf ein Befehlssignal von der Steuereinheit (18) hin arretiert.

5. Luftführungsvorrichtung (10; 10') nach Anspruch 4, bei der die Steuereinheit (18) derart konfiguriert ist, dass sie bei Erreichen des Minimalwerts das Befehlssignal an das Arretierungselement (25) übermittelt.

6. Luftführungsvorrichtung (10; 10') nach einem der voranstehenden Ansprüche, bei der die Luftführung (11) um eine quer zur Längsrichtung (x) verlaufende Querachse (y; y') herum drehbar ist und bei der das Antriebselement (14) derart konfiguriert ist, dass es die Luftführung (11) durch Drehung der Luftführung (11) um diese Querachse (y; y') herum bewegt, um diese Einstellung vorzunehmen.

7. Luftführungsvorrichtung (10; 10') nach einem der voranstehenden Ansprüche, bei der der Parameter die an das Antriebselement (14) übertragene Kraft umfasst.

8. Luftführungsvorrichtung (10; 10') nach Anspruch 7, bei der das Antriebselement (14) einen Elektromotor (20) mit einer Motorwicklung (23) umfasst, und bei der der Sensor (17) derart konfiguriert ist, dass er den Parameter durch Erfassung des die Wicklung (23) des Elektromotors (20) durchfließenden elektrischen Stroms erfasst.

9. Luftführungsvorrichtung (10; 10') nach einem der Ansprüche 1 bis 6, bei der der Sensor (17) derart konfiguriert ist, dass er den Parameter durch Erfassung der auf die Stützstruktur (15, 16) einwirkenden Kraft erfasst.

10. Luftführungsvorrichtung (10; 10') nach Anspruch 9, bei der der Sensor (17) auf der Stützstruktur (15, 16) vorgesehen ist.

11. Luftführungsvorrichtung (10; 10') nach einem der voranstehenden Ansprüche, bei der die Luftführungsvorrichtung (10) einen Filter (19) umfasst, der derart konfiguriert ist, dass er das Signal vom Sensor (17) filtert, ehe dieses Signal von der Steuereinheit (18) empfangen wird.

12. Luftführungsvorrichtung (10; 10') nach einem der voranstehenden Ansprüche, bei der die Luftführung (11) zur Anbringung am Dach (3) des ersten Fahrzeugkörpers (2) in nach vorne und nach unten geneigter Stellung konfiguriert ist, so dass sich der Neigungswinkel (α) ergibt.

13. Luftführungsvorrichtung (10; 10') nach einem der voranstehenden Ansprüche, bei der die Luftführung (11) zur seitlichen Anbringung am ersten Fahrzeugkörper (2) in nach vorne und nach unten geneigter Stellung konfiguriert ist, so dass sich der Neigungswinkel (α) ergibt.

14. Verfahren zur Verringerung des Luftwiderstands eines Landfahrzeugs (1), bei dem eine Längsachse (x) parallel zur normalen Vorwärtsfahrtrichtung des Landfahrzeugs (1) definiert wird, wobei das Landfahrzeug (1) einen ersten Fahrzeugkörper (2) mit einem Dach (3) und einen zweiten Fahrzeugkörper (4) umfasst, welcher hinter dem ersten Fahrzeugkörper (2) angeordnet ist und nach oben und/oder seitlich über den ersten Fahrzeugkörper (2) hinaus verläuft,
wobei das Verfahren folgende Schritte umfasst:
- Bereitstellen einer Luftführung (11) am ersten Fahrzeugkörper (2), welche ein vorderes Ende (11 a) und ein hinteres Ende (11 b) hat und dabei von ihrem hinteren Ende (11 b) zu ihrem vorderen Ende (11a) geneigt verläuft, so dass sich ein Neigungswinkel (α) zur Längsrichtung (x) ergibt,
- Stützen der Luftführung (11) mittels einer Stützstruktur (15, 16),
- Bewegen der Luftführung (11) mittels eines Antriebselements (14),
- Erfassen eines Parameters, der der an die Stützstruktur (15, 16) zum Stützen der Luftführung (11) angebrachten Kraft entspricht,
- Erzeugen eines Signals entsprechend dem erfassten Parameter, und
- Steuern des Antriebselements (14) derart, dass es die Luftführung (11) als Reaktion auf das Signal und den erfassten Parameter bewegt, um den Neigungswinkel (α) auf einen gewünschten Neigungswinkel (α) einzustellen, bei dem der erfasste Parameter einen minimalen Wert hat.

15. Verfahren nach Anspruch 14,
bei dem der Erfassungsschritt folgendes umfasst:
Kontinuierliches Erzeugen des Signals entsprechend dem Momentanwert des erfassten Parameters, und
wobei der Steuerschritt folgendes umfasst:
Kontinuierliches Empfangen des erfassten Parameters während einer vorbestimmten Zeitperiode,
Bestimmen der Ableitung des erfassten Parameters durch schrittweise Bewegung der Luftführung (11), und
Bewegen der Luftführung (11) in eine Richtung, in der sich der erfasste Parameter verringert.

16. Verfahren nach Anspruch 15, bei dem der Steuerschritt folgendes umfasst:
Steuern des Antriebselements (14) zur Bewegung der Luftführung (11) während einer Bewegung von einem ersten Neigungswinkel (α) in einen zweiten Neigungswinkel (α),
kontinuierliches Erfassen des Parameters während dieser Bewegung,
Ermitteln des Minimalwertes der während dieser Bewegung erfassten Kraft, und anschließend Zurückbewegen der Luftführung (11) aus dem zweiten Neigungswinkel (α), bis der Minimalwert erreicht ist.

17. Verfahren nach einem der Ansprüche 14 bis 16, umfassend folgenden weiteren Schritt:
Arretieren der Luftführung (11) im gewünschten Neigungswinkel (α), sobald der Minimalwert erreicht ist.

## Revendications

1. Dispositif de guidage d'air (10 ; 10') destiné à un véhicule terrestre (1) qui définit un axe longitudinal (x) parallèle à la direction de déplacement vers l'avant normale du véhicule terrestre (1), dans lequel le véhicule terrestre (1) comprend un premier corps de véhicule (2) qui possède un toit (3), et un second corps de véhicule (4) placé derrière le premier corps de véhicule (2) et qui s'étend vers le haut et/ou latéralement au-delà du premier corps de véhicule (2),
le dispositif de guidage d'air (10 ; 10') comprenant un guide d'air (11) configuré pour être prévu sur le premier corps de véhicule (2), le guide d'air (11) ayant une extrémité avant (11a) et une extrémité arrière (11b) et étant incliné entre l'extrémité arrière (11b) et l'extrémité avant (11a) afin de former un angle (α) d'inclinaison par rapport à la direction longitudinale (x),
une structure de support (15, 16) qui supporte le guide d'air (11),
un élément d'entraînement (14) relié au guide d'air (11) et prévu pour déplacer le guide d'air (11) afin de changer l'angle (α) d'inclinaison,
un capteur (17) configuré pour générer un signal, et une unité de commande (18) configurée pour contrôler l'élément d'entraînement (14) afin de déplacer le guide d'air (11) en réponse au signal,
dans lequel le capteur (17) est configuré pour détecter un paramètre qui correspond à la force appliquée à la structure de support (15, 16) destinée à supporter le guide d'air, et pour transmettre le signal qui correspond au paramètre détecté à l'unité de commande (18), et
dans lequel l'unité de commande (18) est configurée pour contrôler l'élément d'entraînement (14) afin de déplacer le guide d'air (11) en réponse au signal, et, ainsi, au paramètre détecté, de façon à régler l'angle (α) d'inclinaison,
**caractérisé en ce que**
l'unité de commande (18) est configurée pour contrôler l'élément d'entraînement (14) de façon à déplacer le guide d'air (11), en réponse au signal, vers un angle d'inclinaison (α) souhaité auquel le paramètre détecté possède une valeur minimale.

2. Dispositif de guidage d'air (10 ; 10') selon la revendication 1, dans lequel le capteur (17) est configuré pour générer en continu le signal qui correspond à la valeur momentanée du paramètre détecté, et dans lequel l'unité de commande (18) est configurée pour recevoir le signal en continu pendant une période de temps déterminée, pour établir la dérivée du paramètre détecté par le biais des mouvements incrémentaux du guide d'air (11), et pour déplacer le guide d'air (11) dans une direction qui réduit le paramètre détecté.

3. Dispositif de guidage d'air (10 ; 10') selon la revendication 1, dans lequel l'unité de commande (18) est configurée
pour contrôler l'élément d'entraînement (14) afin de déplacer le guide d'air (11) pendant un mouvement entre un premier angle (α) d'inclinaison et un second angle (α) d'inclinaison, le capteur (17) détectant le paramètre en continu pendant le mouvement,
pour établir la valeur minimale du paramètre détecté pendant ledit mouvement, puis
pour déplacer le guide d'air (11) depuis le second angle (α) d'inclinaison jusqu'à ce que la valeur minimale soit atteinte.

4. Dispositif de guidage d'air (10 ; 10') selon l'une quelconque des revendications précédentes, dans lequel le dispositif de guidage d'air (10 ; 10') comprend un élément de verrouillage (25) qui est configuré pour verrouiller le guide d'air (11) lors de la réception d'un signal de commande de la part de l'unité de commande (18).

5. Dispositif de guidage d'air (10 ; 10') selon la revendication 4, dans lequel l'unité de commande (18) est configurée pour fournir le signal de commande à l'élément de verrouillage (25) dès que la valeur minimale a été atteinte.

6. Dispositif de guidage d'air (10 ; 10') selon l'une quelconque des revendications précédentes, dans lequel le guide d'air (11) peut tourner autour d'un axe transversal (y ; y') qui s'étend transversalement à la direction longitudinale (x), et dans lequel l'élément d'entraînement (14) est configuré pour déplacer le guide d'air (11) en tournant le guide d'air (11) autour de l'axe transversal (y ; y') afin de permettre ledit réglage.

7. Dispositif de guidage d'air (10 ; 10') selon l'une quelconque des revendications précédentes, dans lequel le paramètre comprend l'énergie fournie à l'élément d'entraînement (14).

8. Dispositif de guidage d'air (10 ; 10') selon la revendication 7, dans lequel l'élément d'entraînement (14) comprend un moteur électrique (20) qui comprend un enroulement (23), et dans lequel le capteur (17) est configuré pour détecter ledit paramètre en détectant le courant électrique qui traverse l'enroulement (23) du moteur électrique (20).

9. Dispositif de guidage d'air (10 ; 10') selon l'une quelconque des revendications 1 à 6, dans lequel le capteur (17) est configuré pour détecter ledit paramètre en détectant la force exercée sur la structure de support (15, 16).

10. Dispositif de guidage d'air (10 ; 10') selon la revendication 9, dans lequel le capteur (17) est prévu sur la structure de support (15, 16).

11. Dispositif de guidage d'air (10 ; 10') selon l'une quelconque des revendications précédentes, dans lequel le dispositif de guidage d'air (10) comprend un filtre (19) configuré pour filtrer le signal qui provient du capteur (17) avant que le signal soit reçu par l'unité de commande (18).

12. Dispositif de guidage d'air (10 ; 10') selon l'une quelconque des revendications précédentes, dans lequel le guide d'air (11) est configuré pour être monté sur le toit (3) du premier corps de véhicule (2) afin d'être incliné vers l'avant et vers le bas de façon à former ledit angle (α) d'inclinaison.

13. Dispositif de guidage d'air (10 ; 10') selon l'une quelconque des revendications précédentes, dans lequel le guide d'air (11) est configuré pour être monté sur un côté latéral du premier corps de véhicule (2) afin d'être incliné vers l'avant et vers l'intérieur de façon à former ledit angle (α) d'inclinaison.

14. Procédé de réduction de la résistance à l'air d'un véhicule terrestre (1) qui définit un axe longitudinal (x) parallèle à la direction de déplacement vers l'avant normale du véhicule terrestre (1), dans lequel le véhicule terrestre (1) comprend un premier corps de véhicule (2) qui possède un toit (3), et un second corps de véhicule (4) placé derrière le premier corps de véhicule (2) et qui s'étend vers le haut et/ou latéralement au-delà du premier corps de véhicule (2), le procédé comprenant les étapes qui consistent à :
- prévoir un guide d'air (11) sur le premier corps de véhicule (2), le guide d'air (11) ayant une extrémité avant (11a) et une extrémité arrière (11b), et étant incliné entre l'extrémité arrière (11b) et l'extrémité avant (11a) afin de former un angle (α) d'inclinaison par rapport à la direction longitudinale (x),
- supporter le guide d'air (11) à l'aide d'une structure de support (15, 16),
- déplacer le guide d'air (11) à l'aide d'un élément d'entraînement (14),
- détecter un paramètre qui correspond à la force appliquée à la structure de support (15, 16) destinée à supporter le guide d'air (11),
- générer un signal qui correspond au paramètre détecté, et
- contrôler l'élément d'entraînement (14) afin de déplacer le guide d'air (11) en réponse au signal et au paramètre détecté de façon à régler l'angle (α) d'inclinaison, et selon un angle (α) d'inclinaison souhaité auquel le paramètre détecté possède une valeur minimale.

15. Procédé selon la revendication 14,
dans lequel l'étape de détection comprend
la génération en continu du signal qui correspond à la valeur momentanée du paramètre détecté, et
dans lequel l'étape de contrôle comprend
la réception du signal en continu pendant une période de temps déterminée,
l'établissement de la dérivée du paramètre détecté par le biais des mouvements incrémentaux du guide d'air (11), et
le déplacement du guide d'air (11) dans une direction qui réduit le paramètre détecté.

16. Procédé selon la revendication 15, dans lequel l'étape de contrôle comprend
le contrôle de l'élément d'entraînement (14) afin de déplacer le guide d'air (11) pendant un mouvement entre le premier angle (α) d'inclinaison et un second angle (α) d'inclinaison,
la détection du paramètre en continu pendant le mouvement,
l'établissement de la valeur minimale de la puissance détectée pendant ledit mouvement, puis
le déplacement du guide d'air (11) à partir du second angle (α) d'inclinaison jusqu'à ce que la valeur minimale soit atteinte.

17. Procédé selon l'une quelconque des revendications 14 à 16, qui comprend l'étape supplémentaire qui consiste à :
verrouiller le guide d'air (11) à l'angle (α) d'inclinaison souhaité lorsque la valeur minimale a été atteinte.
